# EUROPÄISCHE PATENTSCHRIFT

(11) **EP 2 402 269 B1**
(45) Veröffentlichungstag und Bekanntmachung des Hinweises auf die Patenterteilung: **23.10.2013**
(21) Anmeldenummer: 11171290.7
(22) Anmeldetag: 24.06.2011
(51) Int. Cl.: B65G 47/82, B65G 47/84

(54) **Ausleitvorrichtung**
Discharge device
Dispositif d'évacuation

(30) Priorität: 30.06.2010 DE 102010025744
(43) Veröffentlichungstag der Anmeldung: 04.01.2012
(73) Patentinhaber: Krones AG, 93073 Neutraubling (DE)
(72) Erfinder: Gut, Thorsten, 93073 Neutraubling (DE)
(74) Vertreter: Hannke, Christian

(56) Entgegenhaltungen:
- EP-A1- 1 609 747
- EP-A2- 1 842 808
- DE-U1- 20 002 411
- FR-A1- 2 849 647

## Beschreibung

Die vorliegende Erfindung ist auf eine Vorrichtung zum Separieren von Stückgut, insbesondere zum Ausleiten von Stückgut aus einem Transportweg, nach dem Oberbegriff des Hauptanspruchs 1, und auf ein Verfahren zum Separieren von mittels einer Fördereinrichtung transportiertem Stückgut, insbesondere zum Ausleiten von Stückgut aus einem Transportweg, nach dem Oberbegriff des Patentanspruchs 7, gerichtet.

Als Stückgut werden in diesem Zusammenhang bevorzugt Behältnisse und besonders bevorzugt Flaschen aber auch Gebinde wie z.B. Getränkekästen, Kartonagen, usw. verstanden. Die Flaschen oder Behältnisse, die neben anderem aus Kunststoff, insbesondere PET, Glas und/oder Metall bestehen können, werden in großen Mengen in Flaschenbearbeitungsanlagen beispielsweise zum Reinigen, zum Etikettieren, zum Füllen und für weitere Bearbeitungsschritte in großen Mengen und mit teilweise sehr hohen Geschwindigkeiten mittels Fördereinrichtungen gefördert. Bei den einzelnen Bearbeitungsschritten kann es möglich sein, dass einzelne Bearbeitungsvorgänge nicht zufriedenstellend erfolgt sind und das einzelne Behältnisse daher zur Einsparung von Ressourcen und zur Vermeidung von unerwünschten Verschmutzungen, Beschädigungen und/oder Ähnlichem nicht weiter im Standardbearbeitungsweg bzw. auf der Standardbearbeitungsbahn geführt werden sollen oder dürfen. Diese Behältnisse werden somit aus dem Standardbearbeitungsweg ausgeschleust oder in einen bzw. mehrere weitere vom Standardweg verschiedene Bearbeitungswege ausgeschleust, in denen sie gegenüber der Bearbeitung im Standardweg völlig verschieden oder vergleichbar bearbeitet werden.

Bisher erfolgt eine derartige Ausschleusung mittels hintereinander angeordneten Pneumatikeinrichtungen, die verschiedene Segmente aufweisen, durch die eine Kurve für die jeweilige Flasche erzeugt werden kann. Die einzelnen Pneumatikeinrichtungen weisen dabei Pneumatikzylinder auf, die in Abhängigkeit von der zu erzeugenden Kurve bzw. dem zu erzeugenden Kurvenanteil eine daran angepasste Zylinderlänge ausbilden. Wird im Stand der Technik eine auszuschleusende Flasche erkannt, so werden die einzelnen Pneumatikeinrichtungen nacheinander bzw. gruppenmäßig gemeinsam oder gruppenmäßig nacheinander betätigt, wodurch sie aus einer Ausgangsstellung in eine Endstellung geschoben werden. Dabei erfolgt mit einer Stirnfläche der Pneumatikeinrichtung eine Verschiebung der auszuschleusenden Flasche im Wesentlichen rechtwinklig zur Förderrichtung. Ein Beispiel einer derartigen Vorrichtung ist beispielsweise der Druckschrift EP 0 003 111 B1 zu entnehmen.

Ferner ist auch aus der Druckschrift EP 1 012 087 B1 eine Vorrichtung bekannt, gemäß der Pneumatikeinrichtungen als Aktuatoren verwendet werden die entlang der Förderstrecke verschiebbar sind. Das Dokument EP 1842808 A2 offenbart einen Vorrichtung zum Ausleiten von mittels einer Fördereinrichtung transportierten Stückgut nach dem Oberbegriff des Anspruchs 1 sowie ein solches Verfahren nach dem Oberbegriff des Anspruchs 7.

Die aus dem Stand der Technik bekannten Vorrichtungen weisen jeweils den Nachteil auf, dass für die Erzeugung der Ausschleuskurve bzw. Förderkurve eine Vielzahl unterschiedlich ausgebildeter Pneumatikeinrichtungen vorgesehen werden müssen, da diese lediglich zwischen einer Ausgangsstellung und einer Endposition bzw. einem Endanschlag verschiebbar sind. Somit ist die Herstellung derartiger Ausschleuseinrichtungen sehr aufwendig und daher fehleranfällig und teuer. Ferner kann lediglich eine einzige in Abhängigkeit der jeweiligen Pneumatikeinrichtungen definierte Förderkurve gebildet werden. Dies ist weiterhin nachteilig, da bei unterschiedlichen Flaschendurchmessern bzw. unterschiedlichen Transportgeschwindigkeiten stets die gleiche Förderkurve verwendet werden muss, die somit nicht optimal hinsichtlich der bereits zuvor genannten und variierenden Randbedingungen sein kann.

Somit ist es Aufgabe der vorliegenden Erfindung, eine einfache, günstig herstellbare und an variierende Randbedingungen, wie z. B. variierende Flaschendurchmesser und/oder variierende Transportgeschwindigkeiten optimal anpassbare Vorrichtung zum Ausschleusen von Stückgut bereit zu stellen. Ferner ist es Aufgabe der vorliegenden Erfindung ein Verfahren zum optimierten Ausschleusen von Stückgut aus einer Förderstrecke bzw. Förderbahn bereit zu stellen.

Erfindungsgemäß erfolgt die Lösung der zuvor gestellten Aufgabe mit einer Vorrichtung zum Ausleiten von mittels einer Fördereinrichtung transportiertem Stückgut nach Anspruch 1.

Die Aktuatoren sind im Bereich der Fördereinrichtung und in deren Förderrichtung hintereinander angeordnet. Bevorzugt bedeutet "im Bereich der Fördereinrichtung angeordnet" zumindest teilweise seitlich daneben und/oder zumindest teilweise darunter oder darüber angeordnet. Demnach sind die Aktuatoren bevorzugt in einem Winkel von 1 bis 90 Grad und besonders bevorzugt in einem Winkel von 45, 60, 75 oder 90 Grad gegenüber der Fördereinrichtung geneigt angeordnet. Die Aktuatoren sind, um gemeinsam eine erste zumindest zeitweise oberhalb der Fördereinrichtung angeordnete Förderkurve auszubilden, in eine erste Förderkonfiguration, in der sie erste Aktuatorlängen ausbilden, überführbar. Durch die erste Förderkonfiguration wird bevorzugt ein Teil eines Standardtransportwegs ausgebildet, der für das als geeignet bewertete Stückgut bzw. Gut-Teile darstellende Flaschen oder Behältnisse vorgesehen ist. Die erste Förderkonfiguration ist von mindestens einer zweiten Förderkonfiguration, in der die Aktuatoren zweite Aktuatorlängen ausbilden, verschieden. Die zweite Förderkonfiguration beschreibt dabei bevorzugt eine Ausleitkonfiguration, in der Schlecht-Teile bzw. Ausschuss aus dem Standardtransportweg ausgeschleust wird.

Die Ausschleusung der Schlecht-Teile kann dabei beispielsweise durch einen Kontakt der Schlecht-Teile mit einer zweiten Förderkurve, die in der zweiten Förderkonfiguration durch die Aktuatoren bzw. daran ausgebildet ist, erfolgen. Es ist jedoch ebenfalls denkbar, dass zwischen den Schlecht-Teilen und den Aktuatoren bzw. einer direkt oder indirekt mit den Aktuatoren in Verbindung stehenden Kontaktfläche kein Kontakt besteht bzw. die Ausschleusung im Wesentlichen kontaktlos erfolgt. Die Aktuatorlängen der zweiten Konfiguration unterscheiden sich daher bevorzugt von den Aktuatorlängen in der ersten Förderkonfiguration.

Erfindungsgemäß sind die Aktuatorlängen der Aktuatoren einstellbar. Dies ist vorteilhaft, da pro Aktuator nicht nur eine einzige Ausgangs- und eine einzige Endposition gegeben ist, sondern ebenfalls bevorzugt jede beliebige Position bzw. Förderkurve einstellbar ist. Dies kann stufenlos oder in Stufen erfolgen. Zum Ausbilden weiterer Förderkurven sind von den ersten und zweiten Aktuatorlängen verschiedene weitere Aktuatorlängen der Aktuatoren einstellbar. Vorteilhaft sind wenigstens zwei verschiedene Aktuatorlängen, vorteilhaft wenigstens 3 Aktuatorlängen, vorteilhaft wenigstens 5 Aktuatorlängen einstellbar. Bevorzugt sind die Aktuatorlängen stufenlos einstellbar.

Erfindungsgemäß ist mindestens ein Aktuator ein positionsgesteuerter Linearmotor. Diese Ausführungsform ist vorteilhaft, da mittels eines Linearmotors, der bevorzugt elektrisch betrieben ist, der jeweilige Verstellweg bzw. die Aktuatorlänge beliebig einstellbar ist, eine Verstellung bzw. Einstellung der Aktuatorlänge sehr ruhig und somit fast lautlos durchführbar ist, kein Druckluftverbrauch erfolgt, wodurch keine Druckluftversorgung vorgesehen werden muss und die einzelnen Produktsorten bzw. unterschiedlichen Behältnissen bei verschiedenen Geschwindigkeiten oder gleichen Geschwindigkeiten optimal ausgeleitet werden können. Vorteilhaft weist die Vorrichtung wenigstens 3 Aktuatoren, vorteilhaft wenigstens 4 Aktuatoren, vorteilhaft wenigstens 5 Aktuatoren, vorteilhaft wenigstens 8 Aktuatoren auf.

Ferner ist diese Ausführungsform ebenfalls vorteilhaft, da die Vorrichtung daher auch für Behältnisse bzw. Flaschen aus Glas verwendet werden kann, die voll, leer oder teilweise gefüllt sind. Weiterhin können Glas oder Kunststoffbehältnisse bzw. Flaschen, insbesondere aus MW/EW-PET, gefüllt, leer oder teilweise gefüllt vor oder nach einem Füller ausgeschleust werden. Die Vorrichtung ist somit besonders bevorzugt Teil einer Behandlungsanlage, die z.B. einen oder mehrere Füller, Transportsterne, Sterilisationseinrichtungen, Etikettiereinrichtungen, Verschlusseinrichtungen, Reinigungseinrichtungen, Überwachungseinrichtungen, ähnliche Einrichtungen und/oder Kombinationen daraus aufweisen kann.

Weiterhin ist vorstellbar, dass der Motor ein beliebiger Motor ist und pneumatisch, hydraulisch, elektrisch und/oder durch Kombination daraus eine Einstellung der jeweiligen Aktuatorlänge ermöglicht. Durch Aktuatorlänge ist besonders bevorzugt der gesamte Bereich zu verstehen, in dem sich der jeweilige Aktuator erstrecken kann. Bevorzugt ist zumindest ein Teil des Aktuators räumlich fixiert und gegenüber diesem einen Teil ist ein Segment, d.h. ein Aktuatorsegment, bewegbar. Der bevorzugt räumlich fixierte Anteil des Aktuators kann beispielsweise neben anderem als Schiene, Zylinder oder Kolben ausgebildet sein.

Die Verwendung von Linearmotoren hat den Vorteil, dass man die Startposition im Ruhezustand genauer definieren kann und dadurch eine mechanische Zustellung zum Band bzw. zur Fördereinrichtung nicht notwendig ist. Bei Sortenwechsel, d.h. bei unterschiedlichem Stückgut, können die Segmente der Aktuatoren eingelernt vor oder zurück fahren, d.h. bevorzugt programmiert vor oder zurück bewegt werden bzw. in ihrer jeweiligen Position fixiert werden. Durch die Möglichkeit der Programmierung der Ansteuerung der einzelnen Motoren, insbesondere der Linearmotoren, sind beliebige Kurven, d.h. beliebige Förderkurven oder Ausschleus- bzw. Ausleitkurven, darstellbar.

Vor allem ist der Hub bzw. die Aktuatorlängenverschiebung einstellbar. Sehr vorteilhaft ist dabei, dass der Hub bzw. die Aktuatorlänge flaschenspezifisch einstellbar ist. Gemäß dem Stand der Technik muss die Standardkurve mit 110 mm Hub verwendet werden, auch wenn die Flaschen nur 55 mm Durchmesser haben und deswegen maximal 70 mm Hub zum Leiten ausreichen würde. Bei geeigneter Ansteuerung, die gemäß der vorliegenden Erfindung möglich ist, kann die Kurve beispielsweise beim letzten Segment den Hub von 70 mm erreichen und somit die gesamte Kurve zum Ausschleusen verwendet werden, wodurch kein Teil der Kurve funktionslos bzw. brachliegen würde. Hierdurch sind höhere Band- bzw. Fördergeschwindigkeiten möglich. Ferner können kürzere Segmentausleitungen gebaut werden, wenn alle Segmente gleich bzw. fast gleich ausgebildet sind.

Weiterhin kann das Kurvendesign geschwindigkeitsabhängig geändert werden, d.h. bei hoher Geschwindigkeit reichen beim zuvor genannten Beispiel 30 mm Hub, wobei die Flaschen genügend Schwung haben, um die geforderten 70 mm zu überbrücken. Die Ausleitung kann in Abhängigkeit der Anzahl der Aktuatoren bzw. Aktuatorsegementen dahingehend definierten werden, dass nur eine sehr geringe bzw. keine Einbringung von Schwingungen in die auszuschleusende Flasche eingebracht werden und sich somit eine sehr ruhige Ausleitung ergibt. Besonders bevorzugt weist eine hinsichtlich der ruhigen Ausleitung optimierte Kurve genau bzw. wenigstens 16 Segmente auf.

In einer weiteren bevorzugten Ausführungsform der vorliegenden Erfindung weist zumindest ein Aktuator ein zumindest in der Aktuatorlängsrichtung verschiebbares Segment auf, das einen Kontaktbereich zum Kontaktieren des Stückguts aufweist. Der Kontakt kann hierbei direkt oder indirekt mit dem Stückgut erfolgen. Ferner können die verschiedenen Segmente Bestandteile des Aktuators sein und/oder mit diesem gekoppelt sein bzw. austauschbar sein. Hieraus ergibt sich der Vorteil, dass je nach Einsatz in der Form verschieden ausgebildete Segmente vorsehbar sind, wobei die Segmente neben anderem z.B. unterschiedliche Kontaktbereiche, Durchmesser und/oder Längen aufweisen können.

In einer weiteren bevorzugten Ausführungsform der vorliegenden Erfindung sind beliebige Förderkurven einstellbar. Dies ist vorteilhaft, da hinsichtlich der Fördergeschwindigkeit und Flaschenart bzw. Flaschengröße oder Flaschendurchmesser sich die jeweils optimale Förderkurve einstellen lässt.

Weiterhin ist bevorzugt eine Steuereinrichtung zum Einstellen der Stellung bzw. Position der Segmente und somit des Kontaktbereichs vorgesehen. Der Kontaktbereich bzw. die Stellung der Segmente ist durch die Steuereinrichtung z.B. in Abhängigkeit von der Flaschenform, dem Flaschenmaterial, dem Füllzustand, der Fördergeschwindigkeit der Fördereinrichtung, ähnlichen und/oder Kombinationen daraus einstellbar.

In einer weiteren bevorzugten Ausführungsform der vorliegenden Erfindung ist die Förderkurve eine aus mindestens einem Stück bestehende Wandung, die zumindest teilweise zumindest zeitweise mit den Aktuatoren verformbar ist und den Kontaktbereich zum Kontaktieren des Stückguts ausbildet. Bevorzugt ist die Wandung ein plattenartiges Element oder eine Vielzahl plattenartiger Elemente. Die Wandung kann zumindest teilweise elastisch ausgebildet sein und jedem Aktuatorsegment ist besonders bevorzugt mindestens ein Wandungselement zugeordnet oder daran angeordnet. Ein plattenartiges Element ist z. B. abschnittsweise eben, wobei es auch vollständig eben sein kann oder vollständig einen sphärisch ausgebildeten Kontaktbereich aufweisen kann.

In einer weiteren bevorzugten Ausführungsform der vorliegenden Erfindung besteht die Wandung aus einer Vielzahl an Wandungselementen, wobei mindestens ein Wandungselement und bevorzugt mehrere oder alle Wandungselemente drehbar oder schwenkbar mit mindestens einem Segment verbunden sind.

Diese Ausführungsform ist vorteilhaft, da durch die schwenkbar bzw. drehbar gelagerten bzw. angeordneten Wandungselemente, diese definiert in die jeweiligen Ausrichtungen verschiebbar und/oder schwenkbar sind.

Da die Verfahrwege des Linearmotors frei parametrisierbar sind, kann z.B. durch den Austausch bzw. die Kopplung anderer bzw. zusätzlicher Segmente auf einfache Weise eine andere Ausleitkurve geformt werden. Vorteile ergeben sich dadurch, dass dieselbe Grundeinheit bei schneller Produktion mit geringerem Behälterdurchmesser mit flachen Kurvensegmenten bestückt werden kann und bei großen Behälterdurchmessern jedoch mit steilen Kurvensegmenten bestückt werden kann. Die geneigte Oberfläche ist bevorzugt die Kontaktfläche der Segmente, die mit den Wandungselementen in Kontakt bringbar ist und besonders bevorzugt parallel zur Längsachse der Behälter steht. Eine Kopplung kann dabei beispielsweise durch Aufstecken der Segmente auf den jeweiligen Aktuator erfolgen, wobei die Segmente besonders bevorzugt in eine Nut, wie z.B. ein Schwalbenschwanz, eingesteckt werden können. Selbstverständlich sind ebenfalls weitere formschlüssige, reibschlüssige und/oder feldschlüssige Kopplungsvarianten denkbar.

In einer weiteren bevorzugten Ausführungsform der vorliegenden Erfindung ist das mindestens eine Wandungselement zumindest zeitweise mit einer Federkraft gegenüber mindestens einem Aktuatorsegment beaufschlagt bzw. beaufschlagbar. Das Federelement kann hierbei beispielsweise als Schenkelfeder ausgeführt sein und zwischen dem Wandungselement und dem Aktuatorsegment angeordnet sein bzw. das Wandungselement und das Segment kontaktieren.

Diese Ausführungsform ist vorteilhaft, da bei der Verwendung einer Vielzahl von Wandungselementen, die insbesondere als Platten ausgeführt sind, bevorzugt zumindest in der zweiten Förderkonfiguration und besonders bevorzugt in der ersten und zweiten Förderkonfiguration eine im Wesentlichen geschlossene Reihe an Platten ausbildbar ist. Mit einer im Wesentlichen geschlossenen Reihe an Platten wird besonders bevorzugt eine im Wesentlichen stetig ausgebildete Oberfläche verstanden.

Die Erfindung ist ebenfalls auf ein Verfahren zum Selektieren bzw. Separieren von mittels einer Fördereinrichtung transportiertem Stückgut, insbesondere Behältnissen, gerichtet. Dabei sind mindestens ein erster und ein zweiter Aktuator im Bereich der Fördereinrichtung und in deren Förderrichtung hintereinander angeordnet, um in einem ersten Schritt gemeinsam eine erste Förderkurve zumindest abschnittsweise oberhalb der Fördereinrichtung in einer ersten Förderkonfiguration auszubilden. Dabei weisen in der ersten Förderkonfiguration die Aktuatoren jeweils erste Aktuatorlängen auf. In einem zweiten Schritt, der jedoch ebenfalls vor dem ersten Schritt erfolgen kann, werden die Aktuatoren in eine zweite Förderkonfiguration überführt, in der die Aktuatoren jeweils zweite Aktuatorlängen aufweisen, die von den ersten Aktuatorlängen verschieden sind, um eine zweite Förderkurve auszubilden. Erfindungsgemäß ist das Verfahren dadurch gekennzeichnet, dass mindestens ein Aktuator ein positionsgesteuerter Linearmotor ist und die Aktuatorlängen der Aktuatoren einstellbar sind.

In einer weiteren bevorzugten Ausführungsform der vorliegenden Erfindung wird die zweite Förderkonfiguration eingestellt, um Ausschuss zumindest teilweise in eine Richtung zu fördern, die von der Richtung, in welcher das Stückgut in der ersten Förderkonfiguration geführt wird, zumindest teilweise verschieden ist.

Diese Ausführungsform ist vorteilhaft, da die auszuschleusenden Behältnisse bzw. das auszuschleusende Stückgut in einer beliebigen Richtung transportierbar, ausschleusbar und/oder förderbar ist.

In einer weiteren bevorzugten Ausführungsform der vorliegenden Erfindung wird der Ausschuss in der zweiten Förderkonfiguration im Wesentlichen kontaktlos an der zweiten Förderkurve vorbeigeführt. Damit wird hier der gesamte Produktionsstrom übergeschoben und nur bei auszuleitenden Behältern werden die entsprechenden Segmente zurückgezogen.

Diese Ausführungsform ist vorteilhaft, da beschädigte oder halbbefüllte Behälter nicht von den Aktuatoren berührt werden müssen und somit Folgeschäden und/oder Verschmutzungen wegen umfallender Behälter effizient vermieden werden können. Auch das Nachschwingen von Segmenten, wie es beim Ausfahren von Stacheln bzw. der Segmente erfolgt, wird vermieden, da bei einer derartigen Steuerung, insbesondere einer Negativsteuerung, die Stacheln oder Segmente aus dem Förderweg wegbewegt werden.

Weitere Vorteile, Ziele und Eigenschaften vorliegender Erfindung werden anhand nachfolgender Beschreibung anliegender Zeichnungen erläutert, in welchen beispielhafte Vorrichtungen zum Ausleiten von Stückgut dargestellt sind. Bauteile der Vorrichtung zum Ausleiten von Stückgut, welche in den Figuren wenigstens im Wesentlichen hinsichtlich ihrer Funktion übereinstimmen, können hierbei mit den gleichen Bezugszeichen gekennzeichnet sein, wobei diese Bauteile nicht in allen Figuren beziffert oder erläutert sein müssen.

Darin zeigen:
- Fig. 1: eine erste zweidimensionale Darstellung, einer erfindungsgemäßen Vorrichtung in einem ersten Prozesszustand;
- Fig. 2: eine weitere zweidimensionale Darstellung der erfindungsgemäßen Vorrichtung in einem zweiten Prozesszustand;
- Fig. 3: eine Detaildarstellung eines Akuatorsegments in Verbindung mit einem Wandungselement in einer ersten und einer zweiten Position;
- Fig. 4: eine Vielzahl an Wandungselemente, die in einer eine Führungskurve ausbildenden Konfiguration dargestellt sind;
- Fig. 5: ein Ausführungsbeispiel einer mit pneumatischen Aktuatoren ausgestatteten Vorrichtung, wobei die Endanschläge der Aktuatoren einstellbar sind;
- Fig. 6: eine weitere Ausführungsform eines Pneumatikaktuators dessen Hub einstellbar ist, in einer ersten Längenkonfiguration; und
- Fig. 7: der in Figur 6 gezeigte Aktuator in einer zweiten Längenkonfiguration.

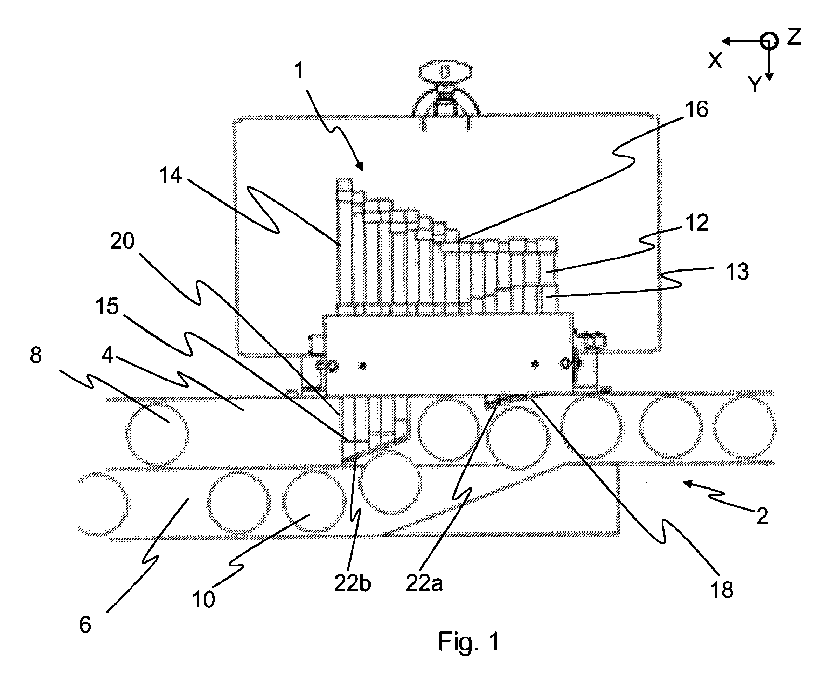

Figur 1 ist eine Vorrichtung 1 zum Ausleiten bzw. zum Selektieren von Stückgut 8, 10 zu entnehmen. Diese Vorrichtung 1 weist eine Fördereinrichtung 2 (wie insbesondere ein Förderband) auf, die bevorzugt eine einbahnige Zuführung umfasst und die sich im Bereich der Vorrichtung 1 in eine mehrbahnige, insbesondere in eine zweibahnige Fördereinrichtung aufsplittet. In Verlängerung der einbahnigen Zufuhrstrecke schließt sich die Ausleitbahn 4 an, die ein- oder mehrteilig mit der Zuführbahn bzw. Zuführstrecke ausgebildet sein kann. Der zweite Teil der Fördereinrichtung 2, der bevorzugt im Bereich der Vorrichtung 1 beginnt, bildet besonders bevorzugt den Standardtransportweg 6 für die "Gut"-Teile. Das auszusortierende Stückgut 8 bzw. die Schlecht-Teile werden bevorzugt ohne Kontakt bzw. nur mit einem geringen Kontakt mit der Vorrichtung 1 auf der Auslaufbahn 4 zu weiteren Einrichtungen bzw. einer weiteren Einrichtung geleitet.

Das nicht auszusortierende Stückgut 10, das auch als weiterzubehandelndes Stückgut 10 bezeichnet werden kann, wird auf der Standardtransportbahn 6 zu einer bzw. mehreren weiteren Einrichtungen geführt. Die Überführung des weiterzubehandelnden Stückguts 10 auf die Standardtransportbahn 6 erfolgt mittels wenigstens einem ersten Aktuator 12 und einem zweiten Aktuator 14.

Der Transportweg der Fördereinrichtung 2 erstreckt sich bevorzugt in X-Richtung, die Aktuatoren weisen bevorzugt Aktuatorsegmente 13, 15 auf, die besonders bevorzugt in Y-Richtung verschiebbar sind. Die Längsrichtung des transportierten und ausgeleiteten Stückguts erstreckt sich bevorzugt in Z-Richtung und somit bevorzugt rechtwinklig zur X-Y-Ebene.

Es ist jedoch ebenfalls denkbar, dass eine Vielzahl weiterer Aktuatoren 16 neben oder auch zwischen dem ersten und zweiten Aktuator 12, 14 vorgesehen sind. Der erste und der zweite Aktuator 12, 14 können dabei direkt nebeneinander angeordnet sein und eine erste Aktuatorgruppe 18, die bevorzugt aus mehreren Aktuatoren 12, 14, 16 besteht, bilden. Ferner kann eine zweite Aktuatorgruppe 20 aus einer Vielzahl an Aktuatoren 12, 14, 16 gebildet werden. Neben der ersten Aktuatorgruppe 18 können selbstverständlich noch weitere Aktuatorgruppen vorgesehen sein.

Durch die einzelnen Aktuatoren und/oder Aktuatorgruppen 18, 20 wird bevorzugt jeweils ein Anteil der Förderkurve ausgebildet. Besonders bevorzugt bilden die jeweiligen Aktuatorgruppen 18, 20 jeweils einen Anteil der Förderkurve 22a, 22b aus, der sich bevorzugt zumindest über 50 % der Stückgutlänge und besonders bevorzugt über 100 % der Stückgutlänge erstreckt. Es kann der Figur 1 entnommen werden, dass die Aktuatorgruppe 18, in diesem Fall aus fünf Aktuatoren bestehend, nur zu einem sehr geringen Teil die Fördereinrichtung 2 überlagert und daher den Beginn der Förderkurve ausbildet. In Transportrichtung X wird das weiterzubehandelnde Stückgut nach der ersten Aktuatorgruppe 18 bevorzugt von einer weiteren Aktuatorgruppe (nicht gezeigt) mit einer durch die Aktuatorgruppe 18 ausgebildeten Förderkurve bzw. mit der bevorzugt stetig steigenden Förderkurve auf die Standardtransportbahn 6 bewegt. Es ist hierbei denkbar, dass das weiter zu behandelnde Stückgut bereits durch eine Verschiebebewegung der Aktuatorsegmente 13, 15 in Y-Richtung verschoben wird und/oder aufgrund der Geschwindigkeit des Stückguts in X-Richtung derart an der Förderkurve abrollt bzw. abgleitet, dass ein Versatz des Stückguts in Y-Richtung resultiert.

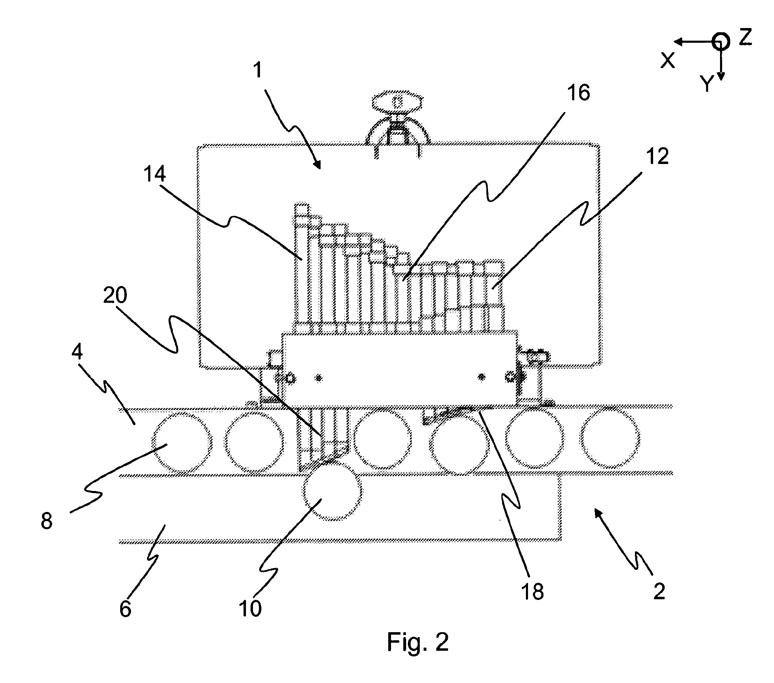

In Figur 2 ist eine mit Figur 1 vergleichbare Ausführungsform der vorliegenden Erfindung dargestellt. Gemäß dieser Figur beginnt die Standardtransportbahn 6 in Transportrichtung X bereits vor der Vorrichtung 1. Es lässt sich dieser Darstellung weiterhin entnehmen, dass der Anteil des auszusortierenden Stückguts 8 größer sein kann als der Anteil des weiterzubehandelnden Stückguts 10. Es ist jedoch ebenfalls denkbar, dass das auszusortierende Stückgut 8 der Vorrichtung 1 durch die Aktuatoren 12, 14, 16 auf eine von der Transportbahn (die in diesem Fall mit Bezugszeichen 4 bezeichnet wäre) verschiedene Ausleitbahn (die in diesem Fall mit dem Bezugszeichen 6 bezeichnet wäre) überführt werden kann.

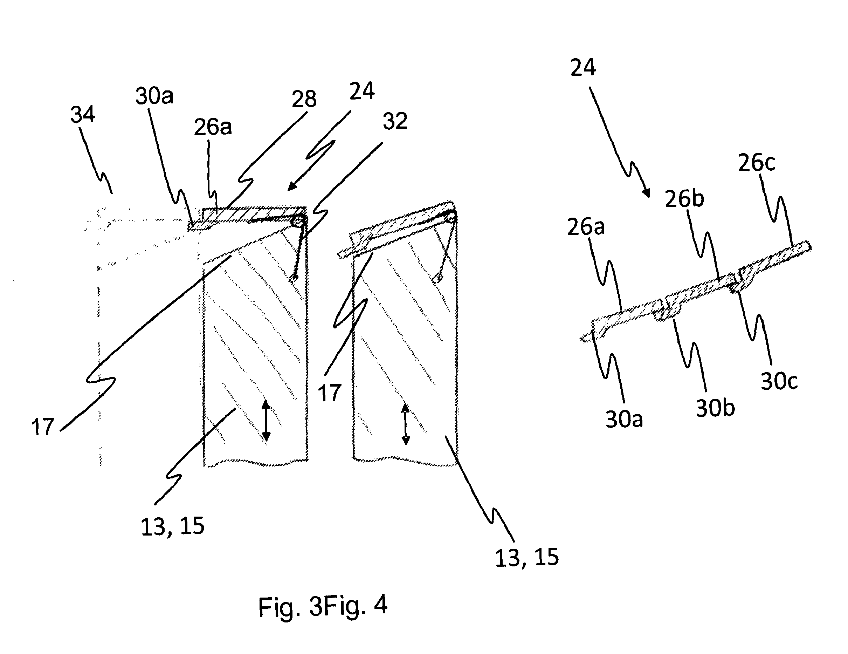

In Figur 3 sind Aktuatorsegmente 13, 15 in einer eingefahrenen Position und einer ausgefahrenen Position dargestellt. In der eingefahrenen Position, der Hubposition, ist die Wandung 24, die einen Kontaktbereich 28 aufweist, der mit dem Stückgut in Kontakt bringbar ist, an einer Stelle gelenkig mit dem Aktuatorsegment 13, 15 verbunden. Die gelenkige Verbindung bzw. das Lager kann auf der Stirnseite 17 des Aktuatorsegments 13, 15 mittig oder versetzt und somit z.B. auf der Seite, wie es in dieser Darstellung vorgesehen ist, angeordnet sein.

Die Wandung 24 ist mit ihrem weiteren Ende, an dem eine Nase 30a ausgebildet ist, von der Oberfläche der Stirnseite 17 des Aktuatorelements 13, 15 beabstandet. Die Stirnseite 17 des Aktuatorelements 13, 15 kann beispielsweise abschnittsweise eben und/oder sphärisch ausgebildet sein und ist besonders bevorzugt gegenüber der Horizontalen in einem spitzen Winkel geneigt. Mit Strichlinien ist ein lediglich schematisch angedeuteter weiterer Aktuator 34 gekennzeichnet, bei dem die Nase 30a des zuvor genannten Aktuators 13, 15 bevorzugt zumindest zeitweise formschlüssig mit der Wandung des weiteren Aktuators 34 verbunden ist.

Der Figur 3 ist ferner ein Aktuator 13, 15 zu entnehmen, bei dem die Wandung 24 auf der Stirnseite 17 aufliegt. Dies ist bevorzugt im ausgefahrenen Zustand der Fall. In diesem Zustand ist das Federelement 32, das bevorzugt als Schenkelfeder ausgeführt ist, gestaucht. Die Verwendung einer Vielzahl von Wandungselementen 26a, 26b, 26c (vgl. Fig. 4) hat den Vorteil, dass durch das Verstellen der Aktuatorsegmente 13, 15 keine Stufen ausgebildet werden, sondern sich eine im Wesentlichen stetige aus flexiblen Platten ausgebildete Wandung ergibt. Die Aktuatorsegmente 13, 15 werden mit dem Aktuator bzw. dem Motor raus und reingefahren, d.h. in Längsrichtung bzw. Y-Richtung verschoben. Dies ist z.B. durch die eingezeichneten Doppelpfeile dargestellt. Die Flaschen 8, 10 gleiten über die Kontaktflächen 28 der Wandungselemente 26a, 26b, 26c der Wandung 24, die bevorzugt als flexible Platten ausgebildet sind, ab. Die Platten 26a, 26b, 26c können, insbesondere zur Reibungsreduzierung, glatt, mit Bürsten, einzelnen oder mehreren Rolleinrichtungen, insbesondere Kugeln oder Rollen, und/oder Luftdüsen oder Ähnlichem versehen sein.

In Figur 4 ist eine Wandung 24 bestehend aus mehreren Wandungselementen 26a, 26b, 26c dargestellt. Die einzelnen Wandungselemente 26a, 26b, 26c sind besonders bevorzugt, beispielsweise wie zu Figur 3 beschrieben, mit dem Aktuatorsegmenten 13, 15 verbunden. Die Wandung 24 bzw. die Wandungselemente 26a, 26, 26c bilden einen Kontaktbereich 28 in Form einer Förderkurve aus. Die gemäß Figur 4 gezeigte Stellung ist bevorzugt in ausgefahrenem Zustand dreier Aktuatorsegmenete bzw. einer Aktuatorgruppe ausgebildet.

Die Schenkelfeder 32 dient dazu, dass die Reihe der Platten 26a, 26b, 26c geschlossen ist. Wird die Kurve ausgefahren, hängt sich die Platte 26b mit der Nase 30b an der vorhergehenden Platte 26a an. Dadurch bildet sich eine geschlossene, stufenlose Linie. Beim Einfahren federn die Platten 26a, 26b, 26c wieder aus. Da das Aktuatorsegment 13, 15 bevorzugt erst einfährt, wenn die Flasche bzw. das Stückgut vollständig über die Platte 26a, 26b, 26c hinweg bewegt ist, ist das Nachfedern der folgenden Platte unerheblich für die ruhige Führung des Stückguts.

Die Nase 30b kann und bevorzugt muss federnd ausgeführt sein, damit sich das Element 26a gemeinsam mit dem Aktuatorsegment 13, 15 zurückziehen kann.

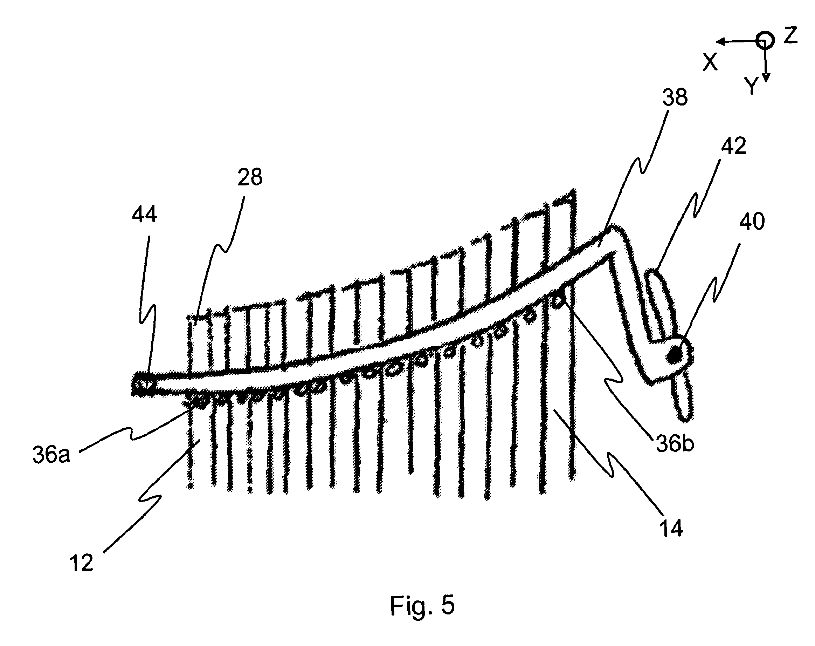

In Figur 5 ist eine Ausführungsform gezeigt, gemäß der die Endanschläge von pneumatischen Aktuatoren 12, 14 und den dazwischen angeordneten pneumatischen Aktuatoren stufenlos einstellbar ist. Die einzelnen pneumatischen Aktuatoren 14, 12 und bevorzugt alle weitere Aktuatoren weisen Anschläge 36a, 36b auf, die mit mindestens einer Schiene 38 derart formschlüssig zusammenwirken, dass eine Begrenzung der Aktuatorverschiebewege bzw. der Aktuatorsegmentverschiebewege und somit verschieden ausgebildete Kontaktbereiche 28 resultieren.

Die Schiene 38 ist besonders bevorzugt eine Stahlschiene und über ein Gelenk bzw. ein Lager 44 in zumindest einem Punkt drehbar gelagert. Eine Drehung um den Punkt bzw. das Lager oder ein Gelenk 44 erfolgt beispielsweise mittels einer Umpositioniereinrichtung 40, die entlang eines Positionierbereichs 42 eine Verschiebung der Schiene 38 ermöglicht. Die Umpositioniereinrichtung 40 kann hierbei mechanisch, pneumatisch, hydraulisch und/oder elektrisch eine Verstellung bewirken und ebenfalls mechanisch, pneumatisch, hydraulisch und/oder elektrisch eine Arretierung bzw. eine Klemmung und somit Fixierung der Position der Schiene 38 ermöglichen bzw. bewirken.

Die Umpositioniereinrichtung 40 kann ebenfalls als Linearmotor ausgeführt sein. Gemäß dieser Darstellung sind alle Aktuatoren 12, 14 und die dazwischen angeordneten Aktuatoren über ihre Anschläge 36a, 36b mit der Schiene 38 in Kontakt. Es ist jedoch bevorzugt, dass einzelne Aktuatoren oder Aktuatorgruppen unabhängig von den übrigen Aktuatoren bzw. Aktuatorgruppen ansteuerbar sind und somit auch zeitversetzt mit der Schiene 38 in Kontakt bringbar sind. Es kann ebenfalls sein, dass einzelne Aktuatoren oder eine bzw. mehrere Gruppen von Aktuatoren in keinem Zustand mit der Schiene zusammen wirken.

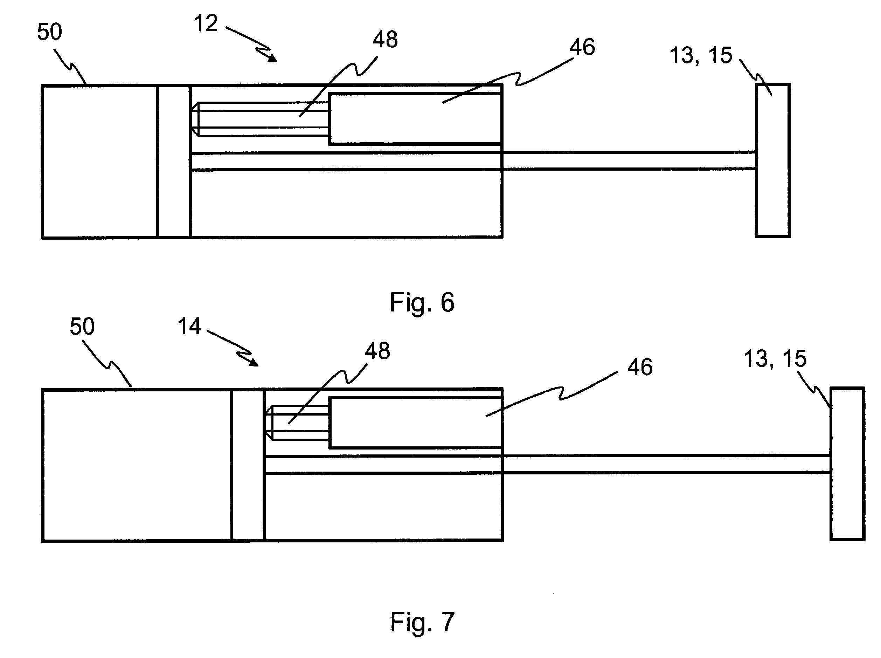

In Figur 6 ist eine weitere Ausführungsform eines ersten Aktuators 12 dargestellt. Dieser Darstellung lässt sich entnehmen, dass der als Pneumatikzylinder ausgebildete Aktuator 12 einen Fluidaufnahmeraum 50, insbesondere einen Gasaufnahmeraum 50, aufweist. Der Gasaufnahmeraum 50 kann mittels einer Anschlageinstelleinrichtung 46 und dem damit verstellbaren Anschlag 48 in seinem Volumen bzw. Hub beschränkt werden. Der verstellbare Anschlag 48 ist hierbei beispielsweise eine Gewindestange oder ein Zapfen, der aus der Anschlageinstelleinrichtung 46 heraus oder hinein bewegbar ist. Die Anschlageinstelleinrichtung 46 kann als Motor, insbesondere als Elektromotor und bevorzugt als Linearmotor, ausgebildet sein.

In Fig. 7 ist eine zweite Anschlagstellung des verstellbaren Anschlags 40 dargestellt, wodurch der Fluidaufnahmeraum 50 gegenüber der in Figur 6 dargestellten Konfiguration verändert ist.

Durch die Figuren 6 und 7 können mehrere maximale Auslenkungen eines Aktuatorsegments 13 oder mehrerer nacheinander angeordneter Aktuatorsegmente 13, 15 dargestellt sein.

### Bezugszeichenliste

- 1: Vorrichtung zum Ausleiten von Stückgut
- 2: Fördereinrichtung
- 4: Ausleitbahn
- 6: Standardtransportbahn
- 8: auszusortierendes Stückgut
- 10: weiterzubehandelndes Stückgut
- 12: erster Aktuator
- 13: erstes Aktuatorsegment
- 14: zweiter Aktuator
- 15: zweites Aktuatorsegment
- 16: weiterer Aktuator
- 17: Stirnseite des Aktuatorsegments
- 18: erste Aktuatorgruppe
- 20: zweite Aktuatorgruppe
- 22: Förderkurve
- 22a: erster Teil der Förderkurve
- 22b: zweiter Teil der Förderkurve
- 24: Wandung
- 26a, 26b, 26c: Wandungselement
- 28: Kontaktbereich
- 30a,30b,30c: Nase
- 32: Federelement
- 34: weiterer Aktuator
- 36a, 36b: Anschlag
- 38: Schiene
- 40: Umpositionierungseinrichtung
- 42: Positionierbereich
- 44: Gelenk
- 46: Anschlageinstelleinrichtung
- 48: verstellbarer Anschlag
- 50: Fluidaufnahmeraum

- X: Transportrichtung
- Y: Längsrichtung der Aktuatorsegmente
- Z: Längsrichtung des Stückguts

## Patentansprüche

1. Vorrichtung (1) zum Ausleiten von mittels einer Fördereinrichtung (2) transportierten Stückgut (8,10), insbesondere Behältnissen (8,10), zumindest umfassend einen ersten und einen zweiten Aktuator (12,14), die im Bereich der Fördereinrichtung (2) und in deren Förderrichtung (X) hintereinander anordenbar sind, wobei die Aktuatoren (12,14), um gemeinsam eine erste zumindest teilweise oberhalb der Fördereinrichtung (2) angeordnete Förderkurve auszubilden, in eine erste Förderkonfiguration, in der sie erste Aktuatorlängen ausbilden, überführbar sind, die von mindestens einer zweiten Förderkonfiguration, in der die Aktuatoren (12,14) zweite Aktuatorenlängen ausbilden, verschieden ist,
**dadurch gekennzeichnet, dass**
mindestens ein Aktuator (12,14) ein positionsgesteuerter Linearmotor ist und die Aktuatorlängen der Aktuatoren (12,14) einstellbar sind.

2. Vorrichtung nach Anspruch 1,
**dadurch gekennzeichnet, dass**
mindestens ein Aktuator (12,14) ein zumindest in der Aktuatorlängsrichtung verschiebbares Aktuatorsegment (13,15) aufweist, das einen Kontaktbereich (28) zum Kontaktieren des Stückguts (8) aufweist.

3. Vorrichtung nach einem der vorangegangenen Ansprüche,
**dadurch gekennzeichnet, dass**
beliebige Förderkurven einstellbar sind.

4. Vorrichtung nach mindestens einer der vorangegangenen Ansprüche,
**dadurch gekennzeichnet, dass**
die Förderkurve eine aus mindestens einem Stück bestehende Wandung aufweist, die zumindest teilweise und zumindest zeitweise mit den Aktuatoren (12,14) verformbar ist.

5. Vorrichtung nach Anspruch 4,
**dadurch gekennzeichnet, dass**
die Wandung (24) aus einer Vielzahl an Wandungselementen (26a, 26b, 26c) besteht, wobei mindestens ein Wandungselement (26a, 26b, 26c) mit mindestens einem Aktuatorsegment (13,15) verbunden ist.

6. Vorrichtung nach Anspruch 5,
**dadurch gekennzeichnet, dass**
mindestens ein Wandungselement (26a,26b,26c) zumindest zeitweise mit einer Federkraft gegenüber dem mindestens einem Aktuatorsegment (13,15) beaufschlagbar ist.

7. Verfahren zum Separieren von mittels einer Fördereinrichtung (2) transportierten Stückgut (8,10), insbesondere Behältnisse (8), wobei mindestens ein erster und ein zweiter Aktuator (12,14) im Bereich der Fördereinrichtung (2) und in deren Förderrichtung (X) hintereinander angeordnet sind, um in einem ersten Schritt gemeinsam eine erste Förderkurve zumindest abschnittsweise oberhalb der Fördereinrichtung (2) in einer ersten Förderkonfiguration auszubilden, wobei in der ersten Förderkonfiguration die Aktuatoren (12,14) jeweils erste Aktuatorlängen aufweisen, und um in einem zweiten Schritt in eine zweite Förderkonfiguration zum Ausbilden einer zweiten Förderkurve überführt zu werden, in der die Aktuatoren (12,14) jeweils zweite Aktuatorlängen aufweisen, die von den ersten Aktuatorlängen verschieden sind,
**dadurch gekennzeichnet, dass**
mindestens ein Aktuator (12,14) ein positionsgesteuertes Linearmotor ist und die Aktuatorlängen der Aktuatoren (12,14) einstellbar sind.

8. Verfahren nach Anspruch 7,
**dadurch gekennzeichnet, dass**
die zweite Förderkonfiguration eingestellt wird, um Ausschuss (8) zumindest teilweise in eine Richtung zu fördern, die von der Richtung, in welcher das Stückgut (10) in der ersten Konfiguration geführt wird, zumindest teilweise verschieden ist.

9. Verfahren nach Anspruch 7 oder Anspruch 8,
**dadurch gekennzeichnet, dass**
der Ausschuss (8) in der zweiten Förderkonfiguration im Wesentlichen kontaktlos an der zweiten Förderkurve vorbeigeführt wird.

## Claims

1. An apparatus (1) for the discharge of bulk material (8, 10), in particular containers (8, 10), conveyed by means of a conveying device (2), at least comprising a first and a second actuator (12, 14) which are capable of being arranged one behind the other in the region of the conveying device (2) and in the conveying direction (X) thereof, wherein, in order jointly to form a first conveying curve arranged at least in part above the conveying device (2), the actuators (12, 14) are capable of being transferred into a first conveying arrangement in which they form first actuator lengths and which is different from at least one second conveying arrangement in which the actuators (12, 14) form second actuator lengths, **characterized in that** at least one actuator (12, 14) is a position-controlled linear motor and the lengths of the actuators (12, 14) are capable of being set.

2. An apparatus according to claim 1, **characterized in that** at least one actuator (12, 14) has an actuator segment (13, 15) which is displaceable at least in the longitudinal direction of the actuator and which has a contact area (28) for contacting the bulk material (8).

3. An apparatus according to one of the preceding claims, **characterized in that** any desired conveying curves are capable of being set.

4. An apparatus according to at least one of the preceding claims, **characterized in that** the conveying curve has a wall which comprises at least one piece and which is capable of being deformed at least in part and at least for a time by the actuators (12, 14).

5. An apparatus according to claim 4, **characterized in that** the wall (24) comprises a plurality of wall elements (26a, 26b, 26c), wherein at least one wall element (26a, 26b, 26c) is connected to at least one actuator segment (13, 15).

6. An apparatus according to claim 5, **characterized in that** at least one wall element (26a, 26b, 26c) is capable of being acted upon at least for a time with a spring force with respect to the at least one actuator segment (13, 15).

7. A method of separating bulk material (8, 10), in particular containers (8), conveyed by means of a conveying device (2), wherein at least one first and one second actuator (12, 14) are arranged one behind the other in the region of the conveying device (2) and in the conveying direction (X) thereof, in order jointly to form a first conveying curve at least locally above the conveying device (2) in a first conveying arrangement in a first step, wherein in the first conveying arrangement the actuators (12, 14) have first lengths in each case, and in order to be conveyed into a second conveying arrangement in a second step to form a second conveying curve in which the actuators (12, 14) have in each case second lengths which are different from the first actuator lengths, **characterized in that** at least one actuator (12, 14) is a position-controlled linear motor and the lengths of the actuators (12, 14) are capable of being set.

8. A method according to claim 7, **characterized in that** the second conveying arrangement is set in order to feed waste (8) at least in part in a direction which is different at least in part from the direction in which the bulk material (10) is conveyed in the first arrangement.

9. A method according to claim 7 or claim 8, **characterized in that** the waste (8) in the second conveying arrangement is conveyed past the second conveying curve substantially without contact.

## Revendications

1. Installation (1) pour la déviation d'articles (8, 10) transportés au moyen d'un dispositif de transport (2), en particulier des récipients (8, 10), comprenant au moins un premier et un deuxième actionneur (12, 14) pouvant être disposés au niveau du dispositif de transport (2), et l'un derrière l'autre dans la direction de transport (X) de celui-ci, lesdits actionneurs (12, 14) pouvant être déplacés ensemble vers une première configuration de transport, où ils forment des premières longueurs d'actionnement, pour constituer ensemble une première courbe de transport au moins partiellement située au-dessus du dispositif de transport (2), ladite première configuration de transport étant différente d'au moins une deuxième configuration de transport, où les actionneurs (12, 14) forment des deuxièmes longueurs d'actionnement,
**caractérisée**
**en ce qu'**au moins un actionneur (12, 14) est un moteur linéaire à commande de position, et en ce que les longueurs d'actionnement des actionneurs (12, 14) sont réglables.

2. Installation selon la revendication 1,
**caractérisée**
**en ce qu'**au moins un actionneur (12, 14) comporte au moins un segment d'actionneur (13, 15) déplaçable dans la direction longitudinale de l'actionneur, lequel présente une zone de contact (28) permettant de contacter l'article (8).

3. Installation selon l'une des revendications précédentes,
**caractérisée**
**en ce que** des courbes de transport quelconques peuvent être réglées.

4. Installation selon au moins une des revendications précédentes,
**caractérisée**
**en ce que** la courbe de transport présente une paroi constituée d'au moins une pièce, laquelle est au moins partiellement et au moins temporairement déformable par les actionneurs (12, 14).

5. Installation selon la revendication 4,
**caractérisée**
**en ce que** la paroi (24) se compose d'une pluralité d'éléments de paroi (26a, 26b, 26c), au moins un élément de paroi (26a, 26b, 26c) étant raccordé à au moins un segment d'actionneur (13, 15).

6. Installation selon la revendication 5,
**caractérisée**
**en ce qu'**au moins un élément de paroi (26a, 26b, 26c) peut être au moins temporairement soumis à une force de ressort par rapport au segment ou aux segments d'actionneur (13, 15).

7. Procédé de séparation d'articles (8, 10) transportés au moyen d'un dispositif de transport (2), en particulier des récipients (8), au moins un premier et un deuxième actionneur (12, 14) pouvant être disposés au niveau du dispositif de transport (2), et l'un derrière l'autre dans la direction de transport (X) de celui-ci, pour lors d'une première étape constituer ensemble une première courbe de transport au moins partiellement située au-dessus du dispositif de transport (2) dans une première configuration de transport, les actionneurs (12, 14) présentant chacun des premières longueurs d'actionnement dans la première configuration de transport, et pour lors d'une deuxième étape être déplacés vers une deuxième configuration de transport pour la formation d'une deuxième courbe de transport, où les actionneurs (12, 14) présentent chacun des deuxièmes longueurs d'actionnement différentes des premières longueurs d'actionnement,
**caractérisé**
**en ce qu'**au moins un actionneur (12, 14) est un moteur linéaire à commande de position, et en ce que les longueurs d'actionnement des actionneurs (12, 14) sont réglables.

8. Procédé selon la revendication 7,
**caractérisé**
**en ce que** la deuxième configuration de transport est réglée pour transporter les articles éjectés (8) au moins partiellement dans une direction au moins partiellement différente de la direction où les articles (10) sont conduits dans la première configuration.

9. Procédé selon la revendication 7 ou la revendication 8,
**caractérisé**
**en ce que** dans la deuxième configuration de transport, les articles éjectés (8) passent sensiblement sans contact devant la deuxième courbe de transport.
